(19) Europäisches Patentamt
European Patent Office
Office européen des brevets

(11) **EP 2 649 696 B1**

(12) **EUROPÄISCHE PATENTSCHRIFT**

(45) Veröffentlichungstag und Bekanntmachung des Hinweises auf die Patenterteilung:
**21.02.2018  Patentblatt 2018/08**

(21) Anmeldenummer: **10798747.1**

(22) Anmeldetag: **07.12.2010**

(51) Int Cl.:
*H02J 3/00* (2006.01)      *H02J 3/14* (2006.01)
*H02J 13/00* (2006.01)

(86) Internationale Anmeldenummer:
**PCT/EP2010/069069**

(87) Internationale Veröffentlichungsnummer:
**WO 2012/076039 (14.06.2012 Gazette 2012/24)**

(54) **LEITSYSTEM**

CONTROL SYSTEM

SYSTÈME DE COMMANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**16.10.2013  Patentblatt 2013/42**

(73) Patentinhaber: **Siemens Aktiengesellschaft 80333 München (DE)**

(72) Erfinder:
• **APEL, Rolf**
  **90461 Nürnberg (DE)**
• **JUNG, Manfred**
  **75045 Joehlingen (DE)**

(56) Entgegenhaltungen:
**US-A1- 2005 207 081      US-A1- 2010 131 117**
**US-B1- 6 621 179**

**EP 2 649 696 B1**

**Beschreibung**

Die Erfindung bezieht sich auf eine Zentraleinrichtung für ein Leitsystem zum Steuern von Energieerzeugern und Energieverbraucher aufweisenden Energieübertragungssystems, wobei die Zentraleinrichtung geeignet ist, anhand eines aktuellen und/oder eines prognostizierten Energieverbrauchs zu ermitteln, wie viel Energie von den Energieerzeugern erzeugt werden soll. Bekanntermaßen können mit Hilfe von Zentraleinrichtungen der beschriebenen Art Energieerzeuger (z. B. Kraftwerke) gesteuert werden, damit diese der jeweiligen Lastanforderung entsprechend Energie erzeugen.

Auch ist es bekannt, Großverbraucher bei der Simulation von Energieübertragungssystemen zu berücksichtigen und für die Ermittlung der optimalen Energiefluss- und Kraftwerksteuerung einzubeziehen. Dies ermöglicht es unter anderem beispielsweise, einzelne Großverbraucher abzustellen oder in ihrem Verbrauch zu reduzieren, wenn die Simulation des Energieübertragungssystems ergibt, dass die Energieerzeuger nicht genügend Strom produzieren können oder aber eine Erhöhung der Energieproduktion nachteilig wäre.

Eine Simulation von Energieübertragungssystemen und eine aktive Laststeuerung der Verbraucher erfordert es jedoch, dass die Zentraleinrichtung zumindest annähernd genau weiß, in welchem Umfange sich die einzelnen Energieverbraucher steuern lassen. Nämlich nur dann, wenn der jeweilige Energieverbraucher auch in der Lage ist, das der Simulation zugrunde gelegte bzw. vorgegebene Lastverhalten nachzubilden, kann das Simulationsergebnis die Realität korrekt nachbilden und eine effiziente Steuerung des Energieübertragungssystems ermöglichen. Bei Leitsystemen, an die eine Vielzahl an Energieerzeuger und Energieverbraucher angeschlossen sind, steigen der Simulationsaufwand und die Simulationszeit mit der Anzahl der Energieerzeuger und Energieverbraucher erheblich an.

Ferner ist es aus den Druckschriften US 2010/0131117 A1, US 2005/0207081 A1 und US 6,621,179 B1 bekannt, in Leitsystemen Zwischensteuereinrichtungen für das Steuern angeschlossener Teilgruppen von Energieverbrauchern einzusetzen.

Der Erfindung liegt daher die Aufgabe zugrunde, eine Zentraleinrichtung für ein Leitsystem anzugeben, die auch Energieübertragungssysteme mit einer Vielzahl an Energieerzeugern und Energieverbrauchern handhaben kann.

Diese Aufgabe wird erfindungsgemäß durch eine Zentraleinrichtung mit den Merkmalen gemäß Patentanspruch 1 gelöst. Vorteilhafte Ausgestaltungen der erfindungsgemäßen Zentraleinrichtung sind in Unteransprüchen angegeben.

Danach ist erfindungsgemäß vorgesehen, dass zumindest einer Teilgruppe der an das Energieübertragungssystem angeschlossenen Energieverbraucher eine individuelle Energiebandbreite zugewiesen ist, die angibt, in welchem Maße sich der Gesamtenergieverbrauch der Teilgruppe voraussichtlich erhöhen oder erniedrigen lässt, und die Zentraleinrichtung geeignet ist - unter Berücksichtigung des Energieerzeugungsverhaltens der Energieerzeuger und der individuellen Energiebandbreite der Teilgruppe -, einen optimalen innerhalb der individuellen Energiebandbreite liegenden Sollenergieverbrauch zu ermitteln, den die Teilgruppe in der Summe erreichen soll, und ein den Sollenergieverbrauch angebendes Steuersignal zu erzeugen.

Ein wesentlicher Vorteil der erfindungsgemäßen Zentraleinrichtung besteht darin, dass diese individuelle Energiebandbreiten von Teilgruppen der Energieverbraucher verarbeiten kann. Die Zentraleinrichtung muss somit nicht mehr jeden einzelnen, steuerbaren und zu steuernden Energieverbraucher individuell berücksichtigen, vielmehr reicht es aus, wenn über eine statistische Mittelung feststeht, dass eine bestimmte Teilgruppe der Energieverbraucher in der Lage ist, Laständerungen herbeizuführen, um innerhalb einer individuell vorgegebenen Energiebandbreite zu bleiben.

Ein weiterer Vorteil besteht darin, dass es durch eine Zuordnung der Energieverbraucher zu Teilgruppen und eine Berücksichtigung der teilgruppenindividuellen Laständerungsmöglichkeit möglich ist, jede Teilgruppe als virtuelles Kraftwerk in die Simulation des Energieübertragungssystems einzubeziehen und simulationstechnisch als "Kraftwerk" zu behandeln: Ein solches virtuelles Kraftwerk erzeugt virtuell Energie, wenn die Energieverbraucher der Teilgruppe ihren Energieverbrauch senken. Eine Berücksichtigung virtueller Kraftwerke ermöglicht es also, die Teilgruppen mit ihrer jeweiligen teilgruppenindividuellen Laständerungsmöglichkeit auch mit heutzutage üblicher Standardsimulationssoftware zu berücksichtigen, die eine Teilgruppenbildung als solche nicht vorsieht. Solche virtuellen Kraftwerke sind zwar nicht in der Lage, selbst real Energie zu erzeugen und einzuspeisen, jedoch sind sie in der Lage, durch eine Änderung des Lastverhaltens der zugeordneten Energieverbraucher zusätzlichen Strom für andere Abzweige oder andere Bereiche des Energieversorgungsnetzes bereitzustellen. Die virtuellen Kraftwerke können in der Zentraleinrichtung wie normale Energieerzeuger mitsimuliert und mitoptimiert werden, wobei deren negatives bzw. inverses Verhalten berücksichtigt wird. Wird also beispielsweise im Rahmen der Simulation festgestellt, dass insgesamt zu viel Energie verbraucht wird oder aber eine Verbrauchserhöhung zu erwarten ist, so kann im Rahmen der Simulation entweder entschieden werden, normale Energieerzeuger hochzufahren und mehr Energie zu erzeugen, oder aber inverse Kraftwerke anzusprechen, um das Lastverhalten zu ändern und den Energieverbrauch zu senken.

Die virtuellen Kraftwerke können im Rahmen der Simulation mit "negativer" Energie rechnen, die die positive Energie der positiven Kraftwerke auslöscht. Eine Erhöhung der Energieproduktion durch positive Kraftwerke kann also verhindert werden, indem die Produktion negativer Energie durch virtuelle Kraftwerke erhöht und die Gesamtlast ausgeglichen wird.

Bei den Energiebandbreiten handelt es sich vorzugsweise um zeitabhängige Größen bzw. "Fahrpläne".

Die Erfindung betrifft darüber hinaus ein Leitsystem zum Steuern eines Energieerzeuger und Energieverbraucher aufweisenden Energieübertragungssystems. Erfindungsgemäß ist vorgesehen, dass das Leitsystem eine Zentraleinrichtung aufweist, wie sie oben beschrieben ist.

Bezüglich der Vorteile des erfindungsgemäßen Leitsystems sei auf die obigen Ausführungen im Zusammenhang mit der erfindungsgemäßen Zentraleinrichtung verwiesen, da die Vorteile der erfindungsgemäßen Zentraleinrichtung denen des erfindungsgemäßen Leitsystems im Wesentlichen entsprechen.

Gemäß einer besonders bevorzugten Ausgestaltung des Leitsystems ist vorgesehen, dass das Leitsystem zumindest eine Zwischensteuereinrichtung aufweist, die mit der Zentraleinrichtung und mit der Teilgruppe in Verbindung steht und geeignet ist, die an sie angeschlossene Teilgruppe der Energieverbraucher derart anzusteuern, dass diese in der Summe einen Energieverbrauch erreichen, der dem Steuersignal der Zentraleinrichtung entspricht.

Mit Blick auf eine Simulation und Steuerung besonders komplexer Energieübertragungssysteme, die eine Vielzahl an Energieverbrauchern und Energieerzeugern aufweist, wird es als vorteilhaft angesehen, wenn das Leitsystem eine Vielzahl an Zwischensteuereinrichtungen aufweist, die jeweils mit der Zentraleinrichtung und jeweils mit einer individuellen Teilgruppe der an das Energieübertragungssystem angeschlossenen Energieverbraucher in Verbindung stehen, jeder der Teilgruppen jeweils eine individuelle Energiebandbreite zugewiesen ist, die angibt, in welchem Maße sich der Gesamtenergieverbrauch der jeweiligen Teilgruppe voraussichtlich erhöhen oder erniedrigen lässt, und jede der Zwischensteuereinrichtungen jeweils geeignet ist, die an sie angeschlossene Teilgruppe der Energieverbraucher derart anzusteuern, dass diese in der Summe einen vorgegebenen, innerhalb der individuellen Energiebandbreite liegenden Sollenergieverbrauch erreicht.

Auch wird es als vorteilhaft angesehen, wenn die Zentraleinrichtung geeignet ist, unter Berücksichtigung des Energieerzeugungsverhaltens der Energieerzeuger und der individuellen Energiebandbreiten aller Teilgruppen für jede Teilgruppe jeweils einen optimalen innerhalb der jeweiligen individuellen Energiebandbreite liegenden Sollenergieverbrauch zu ermitteln, den die jeweilige Teilgruppe erreichen soll, und für jede Zwischensteuereinrichtung jeweils ein individuelles, den jeweiligen Sollenergieverbrauch angebendes Steuersignal zu erzeugen.

Gemäß einer anderen vorteilhaften Ausgestaltung ist vorgesehen, dass mindestens eine der Zwischensteuereinrichtungen eine übergeordnete Zwischensteuereinrichtung bildet, die mit einer Unterteilgruppe der an sie angeschlossenen Energieverbraucher über eine untergeordnete Zwischensteuereinrichtung mittelbar in Verbindung steht, mit der untergeordneten Zwischensteuereinrichtung die Unterteilgruppe der Energieverbraucher in Verbindung steht und die untergeordnete Zwischensteuereinrichtung geeignet ist, die an sie angeschlossenen Energieverbraucher der Unterteilgruppe derart anzusteuern, dass diese in der Summe einen Energieverbrauch erreichen, der einem vorgegebenen Bruchteil des der Teilgruppe zugewiesenen Sollenergieverbrauchs entspricht.

Darüber hinaus bezieht sich die Erfindung auf eine Zwischensteuereinrichtung für ein Leitsystem, wie es oben beschrieben worden ist.

Erfindungsgemäß ist diesbezüglich vorgesehen, dass die Zwischeneinrichtung geeignet ist, eine an sie angeschlossene Teilgruppe an Energieverbrauchern derart anzusteuern, dass diese in der Summe einen Energieverbrauch erreicht, der einem Steuersignal einer übergeordneten Zentraleinrichtung entspricht und innerhalb einer der Teilgruppe individuell zugeordneten Energiebandbreite liegt, die angibt, in welchem Maße sich der Gesamtenergieverbrauch der Teilgruppe voraussichtlich erhöhen oder erniedrigen lässt. Bei einer vorteilhaften Fortbildung der Zwischensteuereinrichtung ist vorgesehen, dass die Zwischensteuereinrichtung eine Recheneinrichtung und einen Speicher aufweist, in dem das Verbrauchsverhalten und die Einstellbarkeit der an die Zwischensteuereinrichtung angeschlossenen Energieverbraucher abgespeichert ist, und die Recheneinrichtung derart programmiert ist, dass sie unter Berücksichtigung des Verbrauchsverhaltens und der Einstellbarkeit der Energieverbraucher für jeden Energieverbraucher einen individuellen Verbrauchswert ermittelt, unter der Maßgabe, dass die Summe der Verbrauchswerte dem Steuersignal der übergeordneten Zentraleinrichtung entspricht.

Als bevorzugt wird es darüber hinaus angesehen, wenn die Zwischensteuereinrichtung mit zumindest einem der an sie angeschlossenen Energieverbraucher in einer Kommunikationsverbindung steht und geeignet ist, den individuellen Sollenergieverbrauch dieses Energieverbrauchers mit diesem auszuhandeln und/oder den individuellen Sollenergieverbrauch dieses Energieverbrauchers unter Berücksichtigung von Lastinformationen, die dieser Energieverbraucher liefert, sowie von vorgegebenen sicherheitstechnischen Restriktionen, die nicht verletzt werden sollen, festzusetzen.

Die Erfindung bezieht sich darüber hinaus auf ein Verfahren zum Steuern eines Energieerzeuger und Energieverbraucher aufweisenden Energieübertragungssystems, wobei anhand eines aktuellen und/oder eines prognostizierten Energieverbrauchs ermittelt wird, wie viel Energie von den Energieerzeugern erzeugt werden soll. Erfindungsgemäß ist vorgesehen, dass zumindest einer Teilgruppe der an das Energieübertragungssystem angeschlossenen Energieverbraucher eine individuelle Energiebandbreite zugewiesen wird, die angibt, in welchem Maße sich der Gesamtenergieverbrauch der Teilgruppe voraussichtlich erhöhen und/oder erniedrigen lässt, und unter Berücksichtigung des Energieerzeugungsverhaltens der Energieerzeuger und der individuellen Energiebandbreite der Teilgruppe ein optimaler innerhalb der individuellen Energiebandbreite liegender Sollenergieverbrauch ermittelt wird, den die Teilgruppe in der Summe erreichen soll, und ein den Sollenergieverbrauch angebendes Steuersignal erzeugt wird.

Bezüglich der Vorteile des erfindungsgemäßen Verfahrens sei auf die obigen Ausführungen im Zusammenhang mit der erfindungsgemäßen Zentraleinrichtung, dem erfindungsgemäßen Leitsystem und der erfindungsgemäßen Zwischensteuereinrichtung verwiesen, da die Vorteile des erfindungsgemäßen Verfahrens denen der erfindungsgemäßen Einrichtungen entsprechen.

Die Erfindung wird nachfolgend anhand von Ausführungsbeispielen näher erläutert; dabei zeigen beispielhaft

Figur 1  ein Ausführungsbeispiel für ein Leitsystem mit einer Zentraleinrichtung und zwei Zwischensteuereinrichtungen, die hierarchisch in derselben Ebene angeordnet sind und beide mit der Zentraleinrichtung unmittelbar in Verbindung stehen, und

Figur 2  ein weiteres Ausführungsbeispiel für ein erfindungsgemäßes Leitsystem, bei dem drei Zwischensteuereinrichtungen vorhanden sind, wobei eine der Zwischensteuereinrichtungen einer anderen Zwischensteuereinrichtung untergeordnet ist, wodurch in der Zwischensteuereinrichtungsebene zwei Hierarchieebenen gebildet werden.

In den Figuren werden der Übersicht halber für identische oder vergleichbare Komponenten stets dieselben Bezugszeichen verwendet.

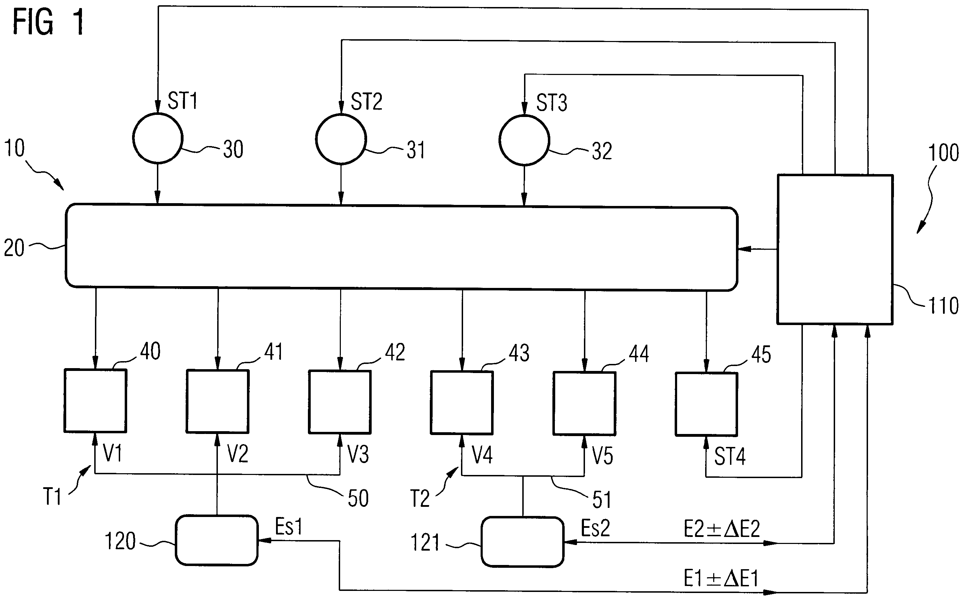

In der Figur 1 ist ein Energieübertragungssystem 10 dargestellt, das ein Leitungssystem 20, Energieerzeuger 30, 31 und 32 sowie Energieverbraucher 40, 41, 42, 43, 44 und 45 umfasst. Das Leitungssystem 20 verbindet die Energieerzeuger 30 bis 32 mit den Energieverbrauchern 40 bis 45.

In der Figur 1 erkennt man darüber hinaus ein Leitsystem 100, das zum Steuern des Energieübertragungssystems 10 geeignet ist. Das Leitsystem 100 umfasst eine Zentraleinrichtung 110 sowie zwei Zwischensteuereinrichtungen 120 und 121.

Die Zentraleinrichtung 110 des Leitsystems 100 steht mit den drei Energieerzeugern 30 bis 32 in Verbindung, um diese hinsichtlich ihrer Energieerzeugung anzusteuern. Die Zentraleinrichtung 110 steht darüber hinaus mit den beiden Zwischensteuereinrichtungen 120 und 121 sowie dem Energieverbraucher 45 in Verbindung.

Die beiden Zwischensteuereinrichtungen 120 und 121 stehen jeweils mit einer Teilgruppe T1 bzw. T2 der Energieverbraucher in Verbindung. So ist die Zwischensteuereinrichtung 120 über ein Kommunikationsnetz 50 an die drei Energieverbraucher 40, 41 und 42 angeschlossen. Die Zwischensteuereinrichtung 121 steht über ein Kommunikationsnetz 51 mit den beiden Energieverbrauchern 43 und 44 in Verbindung, die eine zweite Teilgruppe T2 bilden.

Jeder der beiden Teilgruppen T1 und T2 ist jeweils eine individuelle, vorzugsweise zeitabhängige, Energiebandbreite zugeordnet, die in der Figur 1 mit dem Bezugszeichen E1±ΔE1 (bzw. E1(t)±ΔE1(t)) und E2±ΔE2 (bzw. E2(t)±ΔE2(t)) bezeichnet sind. Die individuellen Energiebandbreiten E1±ΔE1 und E2±ΔE2 werden der Zentraleinrichtung 110 für die Simulation des Energieübertragungssystems 10 zur Verfügung gestellt. Die Energiebandbreiten E1±ΔE1 und E2±ΔE2 können in einem in der Figur 1 nicht weiter dargestellten Speicher abgespeichert oder von außen unmittelbar in die Zentraleinrichtung 110 eingespeist werden. Alternativ können die individuellen Energiebandbreiten E1±ΔE1 und E2±ΔE2 auch von der jeweiligen Zwischensteuereinrichtung 120 bzw. 121 über entsprechende Steuerleitungen zu der Zentraleinrichtung 110 übertragen werden; die Figur 1 zeigt beispielhaft den letztgenannten Fall.
Die Anordnung gemäß Figur 1 kann wie folgt betrieben werden: Die Zentraleinrichtung 110 simuliert und/oder optimiert das Energieübertragungssystem 10 anhand aktueller und/oder prognostizierter Energieverbrauchswerte, wie viel Energie von den Energieerzeugern 30, 31 und 32 erzeugt werden soll. Bei dieser Simulation berücksichtigt sie die Energiebandbreiten ΔE1 und ΔE2, die angeben, in welchem Maße sich der Gesamtenergieverbrauch der beiden Teilgruppen T1 und T2 voraussichtlich erhöhen oder erniedrigen lässt, um den Gesamtverbrauch aller Verbraucher 40 bis 45 an die Energiemenge anzupassen, die von den drei Energieerzeugern 30 bis 32 erzeugt werden kann.
Im Rahmen der Simulation des Energieübertragungssystems 10 erzeugt die Zentraleinrichtung 110 Steuersignale ST1 bis ST3 für die Energieerzeuger 30 bis 32, die angeben, wie viel Energie die Energieerzeuger erzeugen sollen. Außerdem erzeugt sie für den Energieverbraucher 45 ein Steuersignal ST4, mit dem dessen Verbrauch unmittelbar vorgegeben wird.
Die Energieverbraucher 40 bis 44 werden im Unterschied zu dem Energieverbraucher 45 von der Zentraleinrichtung 110 nicht unmittelbar angesprochen. Stattdessen erzeugt die Zentraleinrichtung 110 Sollverbrauchswerte Es1 und Es2, die sie zu den beiden Zwischensteuereinrichtungen 120 und 121 überträgt. Der Sollenergieverbrauchswert Es1 gibt dabei an, welchen Sollenergieverbrauch die drei Energieverbraucher 40, 41 und 42 insgesamt, also in der Summe, erreichen sollen. Der Energieverbrauchswert Es2 gibt an, welchen Energieverbrauch die beiden Energieverbraucher 43 und 44 in der Summe aufweisen sollen. Dabei gilt:

$$E1 - \Delta E1 \leq Es1 \leq E1 + \Delta E1$$

$$E2 - \Delta E2 \leq Es2 \leq E2 + \Delta E2$$

wobei E1 und E2 jeweils einen Energiemittelwert und $\Delta E1$ und $\Delta E2$ jeweils die einzuhaltende Schwankungsbreite bezeichnen.

Die Sollenergieverbrauchswerte Es1 und Es2 liegen also jeweils in der zugeordneten Energiebandbreite $E1\pm\Delta E1$ bzw. $E2\pm\Delta E2$.

Die Zwischensteuereinrichtung 120 wertet den Sollenergieverbrauchswert Es1 aus und ermittelt für jeden der drei Energieverbraucher 40, 41 und 42 jeweils einen individuellen Energieverbrauchswert (bzw. Zielenergieverbrauchswert) V1, V2 und V3. Die drei Energieverbrauchswerte V1, V2 und V3 geben den Energieverbrauch an, den der jeweilige Energieverbraucher 40, 41 und 42 einstellen soll. Die entsprechenden Energieverbrauchswerte V1 bis V3 werden über das Kommunikationsnetz 50 zu den drei Energieverbrauchern 40 bis 42 übermittelt.

Bei der Berechnung der individuellen Energieverbrauchswerte V1 bis V3 berücksichtigt die Zwischensteuereinrichtung 120 den von der Zentraleinrichtung 110 vorgegebenen Sollenergieverbrauch Es1. Die individuellen Verbrauchswerte werden so bestimmt, dass die Summe der Verbrauchswerte V1 bis V3 dem Sollverbrauchswert Es1 entspricht; es gilt also:

$$V1 + V2 + V3 = Es1.$$

In entsprechender Weise arbeitet die Zwischensteuereinrichtung 121, an die die beiden Energieverbraucher 43 und 44 angeschlossen sind. So errechnet die Zwischensteuereinrichtung 121 mit dem Sollenergieverbrauchswert Es2 für die beiden Energieverbraucher 43 und 44 individuelle Energieverbrauchswerte V4 und V5, wobei gilt:

$$Es2 = V4 + V5.$$

Die individuellen Energieverbrauchswerte V4 und V5 werden über das Kommunikationsnetz 51 zu den beiden Energieverbrauchern 43 und 44 übertragen, die dadurch derart eingestellt werden, dass sie den entsprechenden Verbrauchswert einhalten.

Die beiden Zwischensteuereinrichtungen 120 und 121 können die individuellen Verbrauchswerte anhand vorgegebener Steueralgorithmen selbst oder autark bestimmen; alternativ kann vorgesehen sein, dass die Zwischensteuereinrichtungen mit den zugeordneten Energieverbrauchern über das jeweilige Kommunikationsnetz 50 bzw. 51 kommunizieren und mit den jeweiligen Energieverbrauchern abstimmen, wie viel Energie aktuell benötigt wird und in welchem Maße sich eine Verbrauchserhöhung oder Verbrauchsreduktion zum jeweiligen Zeitpunkt durchführen lässt.

Bei der Zuordnung der Energieverbraucher zu den Teilgruppen T1 und T2 wird deren statistisch zu erwartendes Lastverhalten berücksichtigt. Vorzugsweise werden die Teilgruppen jeweils mit Energieverbrauchern bestückt, die sich ähnlich verhalten und deren Lastverhalten in ähnlichem Maße verändert werden kann. Eine solche Zuordnung ermöglicht es, mit relativ hoher statistischer Wahrscheinlichkeit sicherzustellen, dass sich die den Teilgruppen individuell zugeordneten Energiebandbreiten tatsächlich einstellen lassen und die Zwischensteuereinrichtungen tatsächlich auch in der Lage sind, die Sollenergieverbrauchswerte, die von der Zentraleinrichtung 110 übermittelt werden, umzusetzen.

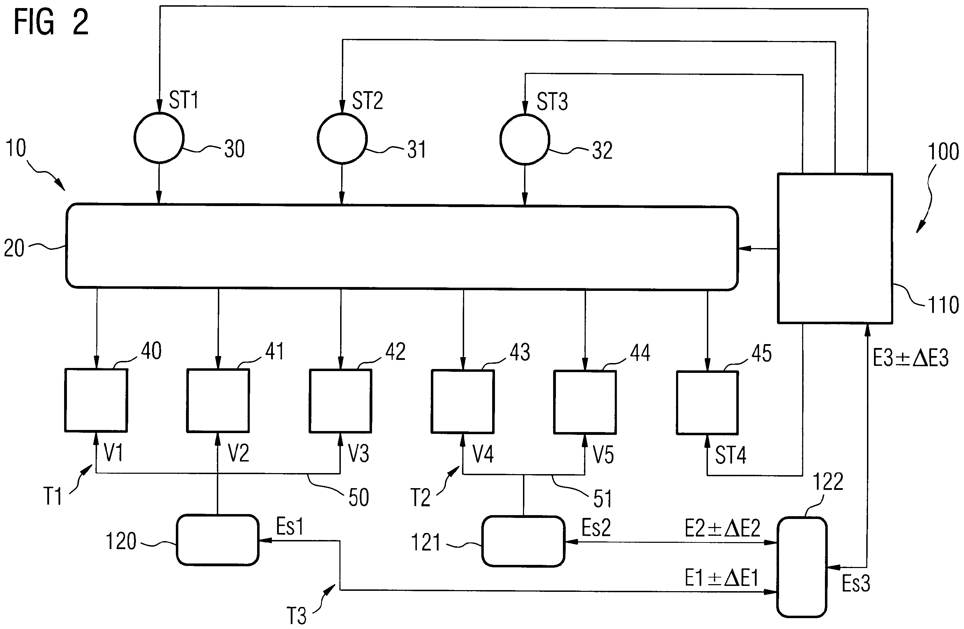

In der Figur 2 ist ein zweites Ausführungsbeispiel für ein Energieübertragungssystem 10 dargestellt, das von einem Leitsystem 100 angesteuert wird.

Im Unterschied zu dem Leitsystem 100 gemäß Figur 1 ist bei dem Leitsystem 100 gemäß Figur 2 eine dritte Zwischensteuereinrichtung 122 vorgesehen, die hierarchisch den beiden Zwischensteuereinrichtungen 120 und 121 übergeordnet ist. Die Zentraleinrichtung 110 steht somit nur mit der übergeordneten Zwischensteuereinrichtung 122 unmittelbar in Verbindung; die Verbindung zu den beiden Zwischensteuereinrichtungen 120 und 121 erfolgt nur mittelbar unter Vermittlung der übergeordneten Zwischensteuereinrichtung 122.

Bei dem Ausführungsbeispiel gemäß Figur 2 übertragen die untergeordneten Zwischensteuereinrichtungen 120 und 121 ihre Energiebandbreiten $E1\pm\Delta E1$ und $E2\pm\Delta E2$ zu der übergeordneten Zwischensteuereinrichtung 122, die unter Verwendung dieser Daten eine Energiebandbreite $E3\pm\Delta E3$ zu der Zentraleinrichtung 110 überträgt; dabei gilt:

$$E3 = E1 + E2$$

und

$$\Delta E3 = \Delta E1 + \Delta E2.$$

Die Zentraleinrichtung 110 verwertet bei der Simulation des Energieübertragungssystems 10 lediglich die Energiebandbreite $E3\pm\Delta E3$, die von der übergeordneten Zwischensteuereinrichtung 122 übermittelt worden ist, sowie den zu erwartenden Energieverbrauch des Verbrauchers 45 und das Energieerzeugungsverhalten der drei Energieerzeuger 30 bis 32.

Im Rahmen der Simulation wird berechnet, welchen Energieverbrauch der Verbraucher 45 sowie die durch die beiden Unterteilgruppen T1 und T2 gebildete Teilgruppe T3 der Energieverbraucher aufweisen sollen, und es werden optimale Steuersignale zur Ansteuerung der Energieerzeuger 30, 31 und 32 ermittelt. Ein entsprechender Sollenergieverbrauchswert Es3 für die Teilgruppe T3 wird von der Zentraleinrichtung 110 zu der übergeordneten Zwischensteuereinrichtung 122 übertragen, die die weitere Ansteuerung der untergeordneten Zwischensteuereinrichtungen 120 und 121 und damit mittelbar die Ansteuerung der Verbraucher 40 bis 44 bewirkt. Die übergeordnete Zwischensteuereinrichtung 122 erzeugt mit dem Sollenergieverbrauchswert Es3 die Sollenergieverbrauchswerte Es1 und Es2, die angeben, welchen Sollenergieverbrauch die beiden Teilgruppen T1 und T2 erreichen sollen, wobei sie berücksichtigt, dass gelten muss:

$$Es3 = Es1 + Es2$$

Die Sollenergieverbrauchswerte Es1 und Es2 gelangen zu den beiden Zwischensteuereinrichtungen 120 und 121, die ihre jeweilige Teilgruppe T1 und T2 ansteuern, wie dies bereits im Zusammenhang mit der Figur 1 erläutert worden ist.

Bei der Anordnung gemäß Figur 2 kann man die Unterteilgruppen T1 und T2 als eine eigene Teilgruppe T3 ansehen, die von der übergeordneten Zwischensteuereinrichtung 122 verwaltet wird. Mit anderen Worten bilden also die Verbraucher 40 bis 44 gemeinsam mit den zugeordneten Zwischensteuereinrichtungen 120 und 121 zwei separate Energieverbraucher, die von der übergeordneten Zwischensteuereinrichtung 122 angesteuert wird.

Die Zentraleinrichtung und die Zwischensteuereinrichtungen weisen vorzugsweise programmierbare Recheneinrichtungen auf, die derart programmiert sind, dass sie die beschriebenen Funktionen ausführen können. Hierzu umfassen die Zentraleinrichtung und die Zwischensteuereinrichtungen vorzugsweise jeweils einen oder mehrere Prozessoren und einen oder mehrere Speichereinrichtungen.

Bezugszeichenliste

| | |
|---|---|
| 10 | Energieübertragungssystem |
| 20 | Leitungssystem |
| 30 | Energieerzeuger |
| 31 | Energieerzeuger |
| 32 | Energieerzeuger |
| 40-45 | Energieverbraucher |
| 50 | Kommunikationsnetz |
| 51 | Kommunikationsnetz |
| 100 | Leitsystem |
| 110 | Zentraleinrichtung |
| 120 | Zwischensteuereinrichtung |
| 121 | Zwischensteuereinrichtung |
| 122 | Zwischensteuereinrichtung |
| V1-V5 | Energieverbrauchswert (Zielenergieverbrauchswert) |
| Es1 | Sollverbrauchswert |
| Es2 | Sollverbrauchswert |
| Es3 | Sollverbrauchswert |
| ST1 | Steuersignal |
| ST2 | Steuersignal |
| ST3 | Steuersignal |
| ST4 | Steuersignal |
| T1 | Teilgruppe |
| T2 | Teilgruppe |
| T3 | Teilgruppe |
| $E1\pm\Delta E1$ | Energiebandbreite |
| $E2\pm\Delta E2$ | Energiebandbreite |
| $E3\pm\Delta E3$ | Energiebandbreite |

**Patentansprüche**

1. Zentraleinrichtung (110) für ein Leitsystem (100) zum Steuern von Energieerzeugern (30-32) und Energieverbraucher (40-45) aufweisenden Energieübertragungssystems (10), wobei die Zentraleinrichtung geeignet ist, anhand eines aktuellen und/oder eines prognostizierten Energieverbrauchs zu ermitteln, wie viel Energie von den Energieerzeugern erzeugt werden soll,
**dadurch gekennzeichnet, dass**

   - zumindest einer Teilgruppe (T1, T2, T3) der an das Energieübertragungssystem (10) angeschlossenen Energieverbraucher (40-44) eine individuelle Energiebandbreite ($E1\pm\Delta E1$, $E2\pm\Delta E2$, $E3\pm\Delta E3$) zugewiesen ist, die angibt, in welchem Maße sich der Gesamtenergieverbrauch der Teilgruppe voraussichtlich erhöhen oder erniedrigen lässt, und
   - die Zentraleinrichtung geeignet ist - unter Berücksichtigung des Energieerzeugungsverhaltens der Energieerzeuger (30-32) und der individuellen Energiebandbreite der Teilgruppe -, einen optimalen innerhalb der individuellen Energiebandbreite liegenden Sollenergieverbrauch (Es1, Es2, Es3) zu ermitteln, den die Teilgruppe in der Summe erreichen soll, und ein den Sollenergieverbrauch angebendes Steuersignal zu erzeugen.

2. Leitsystem (100) zum Steuern eines Energieerzeuger und Energieverbraucher aufweisenden Energieübertragungssystems (10) mit einer Zentraleinrichtung (110) nach Anspruch 1.

3. Leitsystem nach Anspruch 2,
**dadurch gekennzeichnet, dass**

   - das Leitsystem zumindest eine Zwischensteuereinrichtung (120, 121, 122) aufweist, die mit der Zentraleinrichtung und mit der Teilgruppe in Verbindung steht, und

- die Zwischensteuereinrichtung geeignet ist, die an sie angeschlossene Teilgruppe der Energieverbraucher derart anzusteuern, dass diese in der Summe einen Energieverbrauch erreichen, der dem Steuersignal der Zentraleinrichtung entspricht.

4. Leitsystem nach Anspruch 3,
   **dadurch gekennzeichnet, dass**

   - das Leitsystem eine Vielzahl an Zwischensteuereinrichtungen aufweist, die jeweils mit der Zentraleinrichtung und jeweils mit einer individuellen Teilgruppe der an das Energieübertragungssystem angeschlossenen Energieverbraucher in Verbindung stehen,
   - jeder der Teilgruppen jeweils eine individuelle Energiebandbreite zugewiesen ist, die angibt, in welchem Maße sich der Gesamtenergieverbrauch der jeweiligen Teilgruppe voraussichtlich erhöhen oder erniedrigen lässt, und
   - jede der Zwischensteuereinrichtungen jeweils geeignet ist, die an sie angeschlossene Teilgruppe der Energieverbraucher derart anzusteuern, dass diese in der Summe einen vorgegebenen, innerhalb der individuellen Energiebandbreite liegenden Sollenergieverbrauch erreicht.

5. Leitsystem nach Anspruch 4,
   **dadurch gekennzeichnet, dass**

   - die Zentraleinrichtung geeignet ist, unter Berücksichtigung des Energieerzeugungsverhaltens der Energieerzeuger und der individuellen Energiebandbreiten aller Teilgruppen für jede Teilgruppe jeweils einen optimalen innerhalb der jeweiligen individuellen Energiebandbreite liegenden Sollenergieverbrauch zu ermitteln, den die jeweilige Teilgruppe erreichen soll, und für jede Zwischensteuereinrichtung jeweils ein individuelles, den jeweiligen Sollenergieverbrauch angebendes Steuersignal zu erzeugen.

6. Leitsystem nach einem der voranstehenden Ansprüche 3 bis 5,
   **dadurch gekennzeichnet, dass**

   - mindestens eine der Zwischensteuereinrichtungen (122) eine übergeordnete Zwischensteuereinrichtung bildet, die mit einer Unterteilgruppe der an sie angeschlossenen Energieverbraucher über eine untergeordnete Zwischensteuereinrichtung (120, 121) mittelbar in Verbindung steht,

- mit der untergeordneten Zwischensteuereinrichtung die Unterteilgruppe der Energieverbraucher in Verbindung steht und die untergeordnete Zwischensteuereinrichtung geeignet ist, die an sie angeschlossenen Energieverbraucher der Unterteilgruppe derart anzusteuern, dass diese in der Summe einen Energieverbrauch erreichen, der einem vorgegebenen Bruchteil des der Teilgruppe zugewiesenen Sollenergieverbrauchs entspricht.

7. Zwischensteuereinrichtung (120, 121, 122) für ein Leitsystem (100) nach einem voranstehenden Ansprüche 2 bis 6, wobei

   - die Zwischensteuereinrichtung geeignet ist, eine an sie angeschlossene Teilgruppe (T1, T2, T3) an Energieverbrauchern (40-44) derart anzusteuern, dass diese in der Summe einen Energieverbrauch erreicht, der einem Steuersignal einer übergeordneten Zentraleinrichtung entspricht und innerhalb einer der Teilgruppe individuell zugeordneten Energiebandbreite ($E1\pm\Delta E1$, $E2\pm\Delta E2$, $E3\pm\Delta E3$) liegt, die angibt, in welchem Maße sich der Gesamtenergieverbrauch der Teilgruppe voraussichtlich erhöhen oder erniedrigen lässt, und **dadurch gekennzeichnet, dass**
   - die Zwischensteuereinrichtung geeignet ist, die individuelle Energiebandbreite ($E1\pm\Delta E1$, $E2\pm\Delta E2$, $E3\pm\Delta E3$) über entsprechende Steuerleitungen zu der Zentraleinrichtung (110) zu übertragen.

8. Zwischensteuereinrichtung nach Anspruch 7,
   **dadurch gekennzeichnet, dass**
   die Zwischensteuereinrichtung eine Recheneinrichtung und einen Speicher aufweist, in dem das Verbrauchsverhalten und die Einstellbarkeit der an die Zwischensteuereinrichtung angeschlossenen Energieverbraucher abgespeichert ist, und
   die Recheneinrichtung derart programmiert ist, dass sie unter Berücksichtigung des Verbrauchsverhalten und der Einstellbarkeit der Energieverbraucher für jeden Energieverbraucher einen individuellen Verbrauchswert ermittelt, unter der Maßgabe, dass die Summe der Verbrauchswerte dem Steuersignal der übergeordneten Zentraleinrichtung entspricht.

9. Zwischensteuereinrichtung nach Anspruch 8,
   **dadurch gekennzeichnet, dass**
   die Zwischensteuereinrichtung mit zumindest einem der an sie angeschlossenen Energieverbraucher in einer Kommunikationsverbindung steht und geeignet ist, den individuellen Sollenergieverbrauch dieses Energieverbrauchers mit diesem auszuhandeln und/oder den individuellen Sollenergieverbrauch dieses Energieverbrauchers unter Berücksichtigung von Lastinformationen, die dieser Energieverbraucher liefert, sowie von vorgegebenen sicherheitstechnischen Restriktionen festzusetzen.

**10.** Verfahren zum Steuern von Energieerzeugern (30-32) und Energieverbraucher (40-45) aufweisenden Energieübertragungssystems (10), wobei anhand eines aktuellen und/oder eines prognostizierten Energieverbrauchs ermittelt wird, wie viel Energie von den Energieerzeugern erzeugt werden soll, **dadurch gekennzeichnet, dass**

- zumindest einer Teilgruppe (T1, T2, T3) der an das Energieübertragungssystem angeschlossenen Energieverbraucher eine individuelle Energiebandbreite ($E1\pm\Delta E1$, $E2\pm\Delta E2$, $E3\pm\Delta E3$) zugewiesen wird, die angibt, in welchem Maße sich der Gesamtenergieverbrauch der Teilgruppe voraussichtlich erhöhen oder erniedrigen lässt, und

- unter Berücksichtigung des Energieerzeugungsverhaltens der Energieerzeuger und der individuellen Energiebandbreite der Teilgruppe ein optimaler innerhalb der individuellen Energiebandbreite liegender Sollenergieverbrauch (Es1, Es2, Es3) ermittelt wird, den die Teilgruppe in der Summe erreichen soll, und ein den Sollenergieverbrauch angebendes Steuersignal erzeugt wird.

**Claims**

**1.** Central device (110) for a control system (100) for controlling power transmission systems (10) having power generators (30-32) and power consumers (40-45), wherein the central device is suitable for determining, by means of an actual and/or a forecast power consumption, how much power should be generated by the power generators, **characterised in that**

- an individual power bandwidth ($E1+\Delta E1$, $E2+\Delta E2$, $E3+\Delta E3$) is assigned to at least one subgroup (T1, T2, T3) of the power consumers (40-44) connected to the power transmission system (10), said bandwidth indicating to what extent the total power consumption of the subgroup is expected to be raised or lowered, and

- in view of the power generating characteristic of the power generators (30-32) and the individual power bandwidth of the subgroup, the central device is suitable for determining an optimum desired power consumption (Es1, Es2, Es3) which lies within the individual power bandwidth, and which the subgroup should achieve in total, and for generating a control signal indicating the desired power consumption.

**2.** Control system (100) for controlling a power transmission system having power generators and power consumers, with a central device (110) according to claim 1.

**3.** Control system according to claim 2, **characterised in that**

- the control system has at least one intermediate control device (120, 121, 122) which is connected to the central device and to the subgroup, and

- the intermediate control device is suitable for controlling the subgroup of power consumers connected to it, so that said subgroup achieves in total a power consumption which corresponds to the control signal of the central device.

**4.** Control system according to claim 3, **characterised in that**

- the control system has a plurality of intermediate control devices, each of which is linked to the central device and to an individual subgroup of power consumers which are connected to the power transmission system,

- in each case, an individual power bandwidth is assigned to each of the subgroups, said bandwidth indicating to what extent the total power consumption of the respective subgroup is expected to be raised or lowered, and

- in each case, each of the intermediate control devices is suitable for controlling the subgroup of power consumers connected to it, so that this subgroup achieves in total a specified desired power consumption which lies within the individual power bandwidth.

**5.** Control system according to claim 4, **characterised in that**

- in view of the power generating characteristic of the power generators and of the individual power bandwidths of all subgroups, the central device is in each case suitable for determining for each subgroup an optimum desired power consumption which the respective subgroup should achieve, and which lies within the respective individual power bandwidth, and in each case for generating for each intermediate control device an individual control signal indicating the respective desired power consumption.

**6.** Control system according to one of the preceding claims 3 to 5, **characterised in that**

- at least one of the intermediate control devices (122) forms a higher-level intermediate control device which is indirectly linked via a subordinate intermediate control device (120, 121) to a subordinate subgroup of the power consumers connected to it,
- the subordinate subgroup of power consumers is linked to the subordinate intermediate control device, and the subordinate intermediate control device is suitable for controlling the power consumers of the subordinate subgroup connected to it, so that these power consumers achieve in total a power consumption which corresponds to a specified fraction of the desired power consumption assigned to the subgroup.

7. Intermediate control device (120, 121, 122) for a control system (100) according to one of the preceding claims 2 to 6, wherein- the intermediate control device is suitable for controlling a subgroup (T1, T2, T3) of power consumers (40-44) connected to it so that this subgroup achieves in total a power consumption which corresponds to a control signal of a higher-level central device and which lies within a power bandwidth (E1+ΔE1, E2±ΔE2, E3±ΔE3) which is individually assigned to the subgroup, said bandwidth indicating to what extent the total power consumption of the subgroup is expected to be raised or lowered, and
**characterised in that**

- the intermediate control device is suitable for transmitting the individual power bandwidths (E1+ΔE1, E2±ΔE2, E3±ΔE3) to the central device (110) via appropriate control cables.

8. Intermediate control device according to claim 7, **characterised in that** the intermediate control device has an arithmetic logic unit and a memory in which the consumption characteristic and the adjustability of the power consumers connected to the intermediate control device are stored, and the arithmetic logic unit is programmed so that, in view of the consumption characteristic and the adjustability of the power consumers, it determines for each power consumer an individual consumption value, with the proviso that the total of the consumption values corresponds to the control signal of the higher-level central device.

9. Intermediate control device according to claim 8, **characterised in that** the intermediate control device is linked in a communications network to at least one of the power consumers connected to it and is suitable for negotiating with this power consumer the individual desired consumption of this power consumer and/or the individual desired power consumption of this power consumer in view of load data which this power consumer supplies, and for stipulating specified safety restrictions.

10. Method for controlling power transmission systems (10) having power generators (30-32) and power consumers (40-45), wherein it is determined by means of an actual and/or a forecast power consumption how much power should be generated by the power generators,
**characterised in that**

- an individual power bandwidth (E1+ΔE1, E2±ΔE2, E3±ΔE3) is assigned to at least one subgroup (T1, T2, T3) of power consumers connected to the power transmission system, said bandwidth indicating to what extent the total power consumption of the subgroup is expected to be raised or reduced, and
- in view of the power generating characteristic of the power generators and of the individual power bandwidth of the subgroup, an optimum desired power consumption (Es1, Es2, Es3) which lies within the individual power bandwidth is determined, and which the subgroup should achieve in total, and a control signal indicating the desired power consumption is generated.

**Revendications**

1. Dispositif (110) central pour un système (100) de commande pour commander un système (10) de transport d'énergie ayant des producteurs (30 à 32) d'énergie et des consommateurs (40 à 45) d'énergie, le dispositif central étant propre à déterminer, à l'aide d'une consommation d'énergie instantanée et/ou pronostiquée, combien d'énergie doit être produite par les producteurs d'énergie,
**caractérisé en ce que**

- on affecte, à au moins un sous-groupe (T1, T2, T3) des consommateurs (40 à 44) d'énergie raccordés au système (10) de transport d'énergie, une largeur (E1±ΔE1, E2±ΔE2, E3±ΔE3) de bande d'énergie individuelle, qui indique dans quelle mesure la consommation totale d'énergie du sous-groupe peut probablement être augmentée ou diminuée et
- le dispositif central est propre, en tenant compte du comportement de production d'énergie des producteurs (30 à 32) d'énergie et de la largeur de bande d'énergie individuelle du sous-groupe, à déterminer une consommation (Es1, Es2, Es3) d'énergie de consigne optimale se trouvant dans la largeur de bande d'énergie individuelle, que le sous-groupe doit atteindre au total, et à produire un signal de commande indiquant la consommation d'énergie de consigne.

2. Système (100) de commande pour commander un système (10) de transport d'énergie ayant des producteurs d'énergie et des consommateurs d'énergie, par un dispositif (110) central suivant la revendication 1.

3. Système de commande suivant la revendication 2, **caractérisé en ce que**

   - le système de commande a au moins un dispositif (120, 121, 122) de commande intermédiaire, qui est en liaison avec le dispositif central et avec le sous-groupe et
   - le dispositif de commande intermédiaire est propre à commander le sous-groupe, qui lui est raccordé, des consommateurs d'énergie, de manière que ceux-ci atteignent au total une consommation d'énergie correspondant au signal de commande du dispositif central.

4. Système de commande suivant la revendication 3, **caractérisé en ce que**

   - le système de commande a une pluralité de dispositifs de commande intermédiaire, qui sont respectivement en liaison avec le dispositif central et respectivement avec un sous-groupe individuel des consommateurs d'énergie raccordés au système de transport d'énergie,
   - à chacun des sous-groupes est affecté respectivement une largeur de bande d'énergie individuelle, qui indique dans quelle mesure la consommation d'énergie totale du sous-groupe peut probablement être augmentée ou diminuée et
   - chacun des dispositifs de commande intermédiaires est propre à commander le sous-groupe, qui lui est raccordé, des consommateurs d'énergie, de manière à ce que ceux-ci au total atteignent une consommation d'énergie de consigne donnée à l'avance se trouvant dans la largeur de bande d'énergie individuelle.

5. Système de commande suivant la revendication 4, **caractérisé en ce que**

   - le dispositif central est propre, en tenant compte du comportement de production d'énergie des producteurs d'énergie et des largeurs de bande d'énergie individuelles de tous les sous-groupes, à déterminer pour chaque sous-groupe respectivement, une consommation d'énergie de consigne optimale se trouvant dans la largeur de bande d'énergie individuelle respective, que le sous-groupe respectif doit atteindre, et à produire, pour chaque dispositif de commande intermédiaire, respectivement un signal de commande individuel indiquant la consommation d'énergie de consigne respective.

6. Système de commande suivant l'une des revendications précédentes 3 à 5, **caractérisé en ce que**

   - au moins l'un des dispositifs (122) de commande intermédiaire forme un dispositif de commande intermédiaire supérieur hiérarchiquement, qui est indirectement en liaison, par l'intermédiaire d'un dispositif (120, 121) de commande intermédiaire subordonnée, avec un sous-sous-groupe des consommateurs d'énergie, qui lui sont raccordés,
   - le sous-sous-groupe des consommateurs d'énergie est en liaison avec le dispositif de commande intermédiaire subordonné et le dispositif de commande intermédiaire subordonné est propre à commander des consommateurs d'énergie, qui lui sont raccordés, du sous-sous groupe, de manière à ce que ceux-ci atteignent au total une consommation d'énergie correspondant à une fraction donnée à l'avance de la consommation d'énergie de consigne affectée au sous-groupe.

7. Dispositif (120, 121, 122) de commande intermédiaire pour un système (100) de commande suivant l'une des revendications précédentes 2 à 6, dans lequel

   - le dispositif de commande intermédiaire est propre à commander un sous-groupe (T1, T2, T3), qui lui est raccordé, de consommateurs (40 à 44) d'énergie, de manière à ce que ceux-ci atteignent au total une consommation d'énergie, qui correspond à un signal de commande d'une unité centrale supérieure hiérarchiquement et qui se trouve à l'intérieur d'une largeur ($E1\pm\Delta E1$, $E2\pm\Delta E2$, $E3\pm\Delta E3$) de bande d'énergie affectée individuellement au sous-groupe, largeur qui indique dans quelle mesure la consommation d'énergie totale du sous-groupe peut probablement être augmentée ou diminuée et

   **caractérisé en ce que**

   - le dispositif de commande intermédiaire est propre à transmettre la largeur ($E1\pm\Delta E1$, $E2\pm\Delta E2$, $E3\pm\Delta E3$) de bande d'énergie individuelle par des lignes de commande adéquates au dispositif (110) central.

8. Dispositif de commande intermédiaire suivant la revendication 7,
**caractérisé en ce que**
le dispositif de commande intermédiaire a une unité informatique et une mémoire, dans laquelle sont mémorisés le comportement de consommation et la possibilité de réglage des consommateurs d'énergie raccordés au dispositif de commande intermédiaire et le dispositif informatique est programmé de manière, en tenant compte du comportement de consommation et de la possibilité de réglage des consommateurs d'énergie, à déterminer, pour chaque consommateur d'énergie, une valeur de consommation individuelle, à la condition que la somme des valeurs de consommation corresponde au signal de commande du dispositif central supérieur hiérarchiquement.

9. Système de commande suivant revendication 8,
**caractérisé en ce que**
le dispositif de commande intermédiaire est en une liaison de communication avec au moins l'un des consommateurs d'énergie qui lui est raccordé et est propre à négocier avec celui-ci la consommation d'énergie de consigne individuelle de ce consommateur d'énergie et/ou la consommation d'énergie de consigne individuelle de ce consommateur d'énergie en tenant compte d'informations de charge, que fournit ce consommateur d'énergie, ainsi qu'à mettre des restrictions données à l'avance du point de vue de la technique de sécurité.

10. Procédé de commande de système (10) de transport d'énergie ayant des producteurs (30 à 32) d'énergie et des consommateurs (40 à 45) d'énergie,
dans lequel,
à l'aide d'une consommation d'énergie instantanée et/ou pronostiquée, on détermine combien d'énergie doit être produite par les producteurs d'énergie,
**caractérisé en ce que**

- on affecte, à au moins un sous-groupe (T1, T2, T3) des consommateurs d'énergie raccordés au système de transport d'énergie, une largeur (E1±ΔE1, E2±ΔE2, E3±ΔE3) de bande d'énergie individuelle, qui indique dans quelle mesure la consommation d'énergie totale du sous-groupe doit probablement être augmentée ou diminuée et
- en tenant compte du comportement de production d'énergie des producteurs d'énergie et de la largeur de bande d'énergie individuelle du sous-groupe, on détermine une consommation (Es1, Es2, Es3) d'énergie de consigne optimale se trouvant dans la largeur de bande d'énergie, que le sous-groupe doit atteindre au total et on produit un signal de commande indiquant la consommation d'énergie de consigne.

FIG 1

FIG 2

EP 2 649 696 B1

**EP 2 649 696 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20100131117 A1
- US 20050207081 A1
- US 6621179 B1